# EUROPEAN PATENT SPECIFICATION

(11) **EP 0 391 492 B1**
(45) Date of publication and mention of the grant of the patent: **05.01.1994**
(21) Application number: 90200812.7
(22) Date of filing: 04.04.1990
(51) Int. Cl.: A22C 9/00, A22C 5/00

(54) **Wormscrew device for massaging pieces of meat**
Schneckenvorrichtung zum Massieren von Fleischstücken
Dispositif à vis sans fin pour masser des pièces de viande

(30) Priority: 05.04.1989 NL 8900847
(43) Date of publication of application: 10.10.1990
(73) Proprietor: STORK LANGEN B.V., 5431 SH Cuijk (NL)
(72) Inventor: Langen, Christianus Petrus, NL-5431 BB Cuijk (NL); Verheyen, Jacobus Wilhelmus Johannes, NL-6587 AH Middelaar (NL)
(74) Representative: Hoorweg, Petrus Nicolaas

(56) References cited:
- EP-A- 0 041 744
- CA-A- 1 153 928
- DE-A- 1 782 322

## Description

The invention relates to a device for massaging pieces of meat, comprising a vessel for receiving a quantity of meat, a closure body sealingly placable over said vessel to provide vacuum circumstances in said vessel, said closure body is provided with at least one agitation member embodied as a wormscrew directed toward said vessel and means for placing said agitation member in contact with the meat.

Devices of the type described in the preamble are known in a number of embodiments as for instance CA-A-1153928.

The object of the invention is to improve such a device, wherein the massaging of the meat can take place under a pressure, differing from atmospheric pressure, and without damaging the meat.

The device according to the invention is distinguished in that the height of said agitation member at least corresponds with the distance between the top of said closure body and the upper rim of said vessel wherein said agitation means is displacable into said vessel and retractable therefrom during said vacuum circumstance when the closure body is placed over said vessel.

The invention is further elucidated in the figure description hereinbelow of an embodiment.

In the drawing:
Figure 1 shows a perspective top view of a processing line for massaging meat,
figure 2 is a standing view of a portion of the device from figure 1 along the arrow II,
figure 3 is a top view of the device from figure 2 according to the arrow III-III,
figure 4 shows a view of the device corresponding with figure 2 in a different position of use,
figure 5 shows a perspective view of a detail of the device from figure 2 according to arrow V.

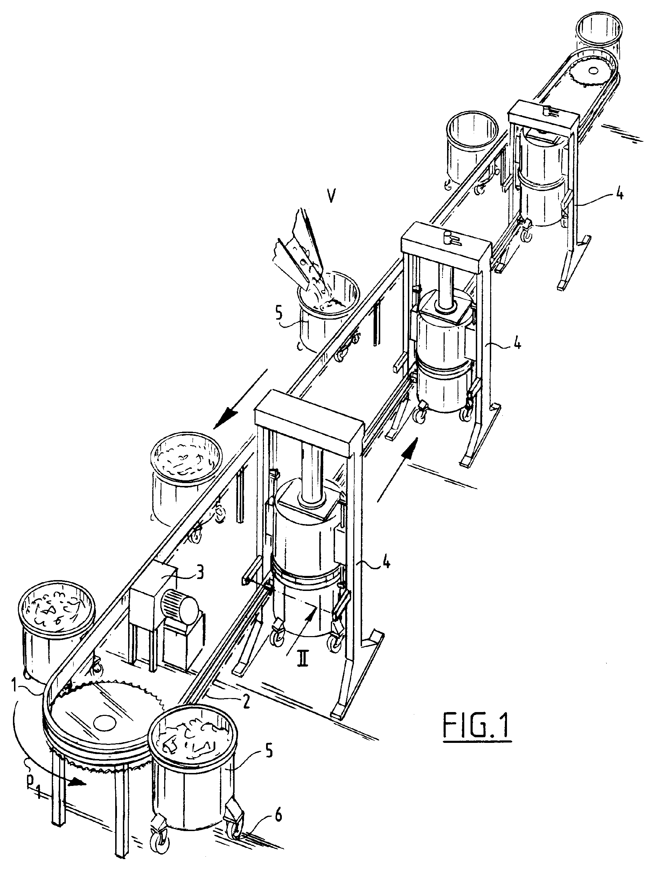

Figure 1 shows a processing line provided with a closed track 1 along which a conveyor means operates, for instance a chain as indicated with the broken line 2. The chain is driven by a drive station 3 disposed inside the closed track. The driving and the type of chain can be random and otherwise fall outside the scope of the invention.

Disposed along the right side of the closed track 1 are three portals 4 wherein the treatment of the content of one vessel 5 at a time can take place. The vessels 5 are guided by means of the chain 2 in the direction of the arrow P1 along the closed track and therefore past the three portals shown in figure 1. Each vessel 5 is provided with castor wheels 6 in order to enable transport over the floor.

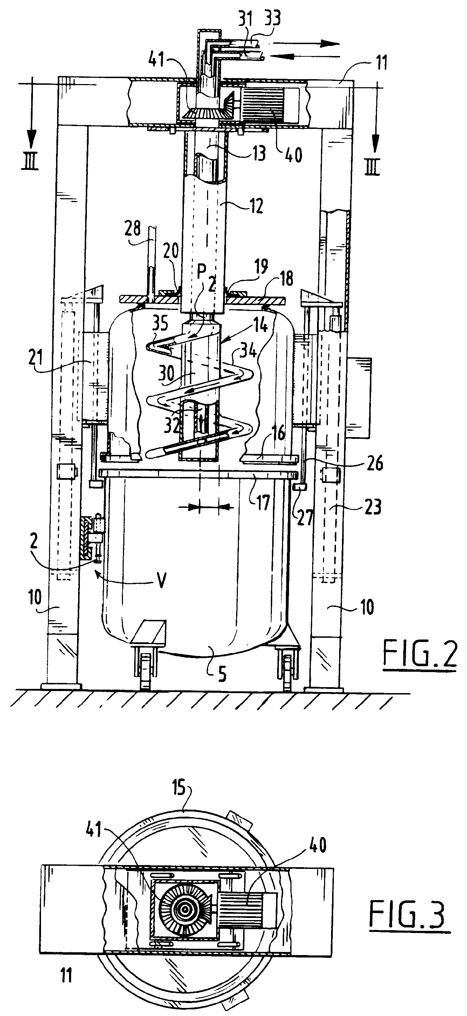

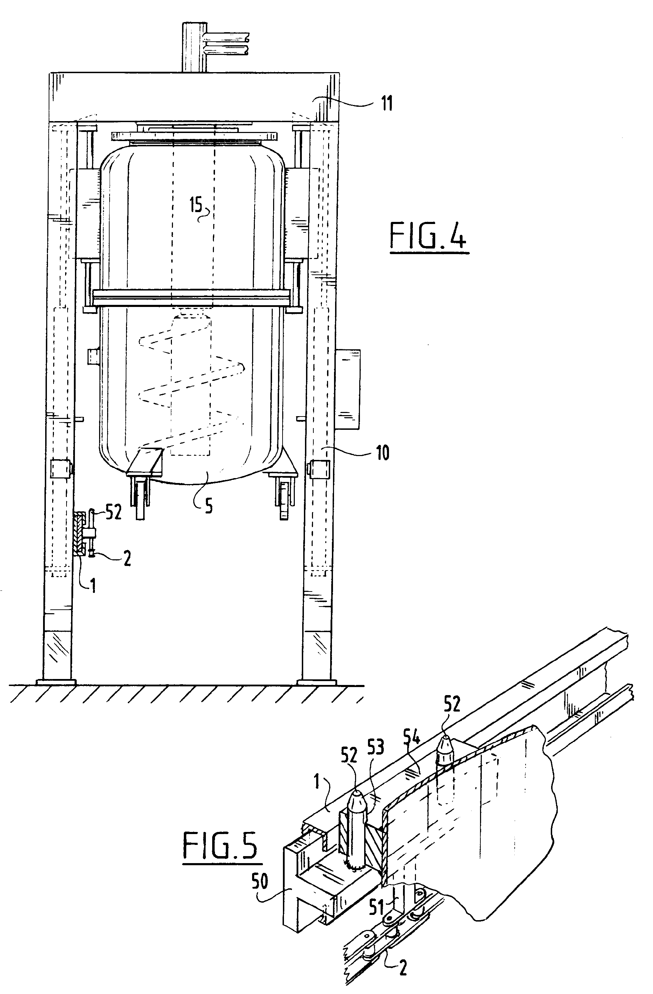

The massaging device according to the device is incorporated in a portal 4, elucidation of which takes place with reference to the figures 2-4.

It can be seen here that each portal consists of two posts 10 which are arranged at a mutual interval but which are joined at the top by a hollow tubular beam 11. Suspended on the underside of the tubular beam 11 is a shank 12 which serves as bearing for a spindle 13 on the bottom of which is arranged an agitation member 14. Arranged between the portals is a closure body 15, the underside whereof is provided with a flange 16 which co-acts with a flange 17 of the vessel 5. The embodiment is such that between the flanges 16 and 17 an airtight connection can be realized. The closure body 15 is bell-shaped and is sealingly closed at the top by a closing plate 18 which is provided with a central opening 19 which is close-fitting along the shank 12 by means of a sealing ring 20 and permits an up and downward movement.

The bell-shaped closure means 15 is embodied on either side with a sliding member 21 which can slide up and down in a guiding (not shown) in the portal 10. Arranged in each portal 4 is an hydraulic cylinder 23, wherein the piston rod 24 thereof is provided at the top with a bridge piece 25 which is connected to a lifting rod 26 running parallel to the piston rod and provided at the bottom with a stop 27.

The closing plate 18 is provided with a vacuum connection 28 connected to a vacuum source (not shown).

There now follows a description of the agitation member 14 which is embodied according to the invention.

The agitation member 14 consists of a central portion 30 which takes a hollow form and which communicates with the feed line extending through the shank 12 to a point above the cross beam 11. The feed line is connected to a feed pipe 31 for a cooling liquid. Arranged centrally in the central portion 30 is a discharge pipe 32 which likewise extends through the shank part 12 and through the hollow drive rod 13 to a point close to the top end of the cross beam 11. This discharge pipe 32 is connected to a discharge line 33 for discharge of the cooling liquid.

Arranged about the central portion 30 of the agitation member is a helical wall portion 34 which is provided with a flow channel 35 for passage of the cooling liquid. This cooling liquid enters from the feed line 31 via shank part 12 at the arrow P2, runs via the channel 35 along the outside of the helical wall portion 34 to the discharge channel 32. The helical wall portion 34 can in this way be cooled by the cooling liquid.

It is noted that the height of the wormscrew 14 consisting of the central portion 30 and the helical wall portion 34 is at least equal to half the height of the vessel 5. The diameter of the wormscrew is approximately half the diameter of the vessel 5, as shown in figure 2. Other embodiments are however possible within the scope of the invention. Two helical agitation members can for example be arranged adjacent to one another without detracting from the proper operation of the device.

The wormscrew 14 can be set into rotation by a motor 40 which can set the rotation shaft 13 into rotation via a right-angle transmission 41. The above described device operates as follows.

After a vessel 5 has been filled with a determined quantity of meat mass consisting of meat pieces at the filling station V, on the left in figure 1, the vessel with contents can be carried via the closed track 1 in the direction of the arrow P1 to the first portal 4. When the drive chain 2 is stopped at the correct position of the vessel 5 beneath the bell 15, the vessel 5 can be placed sealingly against the bell 15 by lifting the bridge pieces 25 by means of the cylinders 23. The stop member 27 hooks under the flange 17 and places the flange 17 in contact with the flange 16 of the bell. By applying a vacuum in the bell and the vessel 5 via the connecting line 28 the vessel 5 will be held against the bell 15, this being possible due to the sealing action between the flanges 16 and 17. The vessel 5 is lifted therein from the drive chain 2 by a system further elucidated below with reference to figure 5. As the system of vessel 5 and bell 15 is moved further upward the agitation member 14 will be carried still further into the space of the vessel 5 as a result of the guiding action between the shank 12 and the opening in plate 18. The vacuum is maintained due to the sealing 20. By turning the agitation member 14 in a determined rotational direction by means of starting the motor 40 the quantity of meat in the vessel 5 is subjected to a massaging action by the agitation member 14 which because of the size exerts a continuous pressure on the meat and presses it upward along the wall of the vessel 5 and the bell 15, whereafter it drops downward. Subsequently the piece of meat is again carried downward between the helical wall 34 to the bottom of the vessel 5 and then pressed upward again through the upward driving effect of the following piece of meat. Cooling can take place simultaneously as a result of the cooling effect of the cooling liquid in the flow channel 35 in the helical wall 34. The whole operation is performed under vacuum so that no air inclusions in the meat will occur.

After a determined treatment time the system of vessel 5 and bell 15 can be moved downward through release of the cylinders 23. When the vacuum in the system of vessel 5 and bell 15 is broken via line 28 the vessel 5 can again be disconnected from the bell and placed in connection with the chain 2. The vessel 5 with the massaged meat can subsequently be transported further, for example to the following portal 4 for a further massaging treatment, and optionally for another repeated massaging treatment in the following portal 4. It is of course also possible within the scope of the invention to process three vessels 5 simultaneously, after which only one massage cycle is necessary per vessel 5.

For automatic coupling to and release from the chain 2 of the vessel 5, the former is embodied with a carriage 50 which is connected via a coupling arm 51 to the chain 2, see figure 5, which carriage 50 can slide in the guide-way 1 which displays an open channel shape. The carriage 50 is further provided with two standing pins 52 which lie at a mutual interval and which can be received in two eyes 53 of a block 54 attached to the wall of the vessel 5.

It will be apparent from the foregoing description that due to the standing pins 52, through the upward movement of the vessel 5 the block 54 can be raised from the pins 52 and can subsequently be replaced when the vessel is brought downward.

The invention is not limited to the above described embodiment. The agitation member 14 can be embodied in any other random manner, be provided without cooling channel 35, have a different pitch angle, be embodied with a multiple thread and, as stated earlier, be provided with two or more wormscrews per bell 15.

The worm can in addition be arranged non-centrally, but for instance eccentrically relative to the bell 15 and the vessel 5.

## Claims

1. Device for massaging pieces of meat, comprising a vessel (5) for receiving a quantity of meat, a closure body (15) sealingly placable over said vessel (5) to provide vacuum circumstances in said vessel, said closure body is provided with at least one agitation member (14) embodied as a wormscrew directed toward said vessel and means for placing said agitation member in contact with the meat, **characterized in that** the height of said agitation member (14) at least corresponds with the distance between the top of said closure body and the upper rim of said vessel wherein said agitation means is displacable into said vessel and retractable therefrom during said vacuum circumstance when the closure body is placed over said vessel.

2. Device as claimed in claim 1, **characterized in** **that** the agitation member (14) is arranged coaxially in the bell-shaped closure body (15) and is provided with a spindle (12) arranged slidably in sealing manner in the bell.

3. Device as claimed in claims 1 and 2, **characteri****zed in that** the agitation member consists of a central hollow portion (30), and a helical wall portion (34) arranged thereabout with a flow channel (35), wherein said flow channel communicates with said hollow central portion (30).

4. Device as claimed in claim 3, **characterized** **in** **that** the diameter of the circumferential circle of the helical wall portion (34) is approximately half the diameter of the vessel (5).

5. Device as claimed in any of the preceding claims, **characterized in that** the bell-shaped closure body (15) is provided with a vacuum connection (28).

6. Device as claimed in any of the preceding claims, **characterized in that** the agitation member (15) with shank part (12) is mounted vertically and rotatably driven in a portal-shaped frame (10), wherein the bell-shaped closure body is adapted to be movable up and downwardly in said frame along said shank part (12).

7. Device as claimed in any of the preceding claims, **characterized in that** the flow channel (35) in the helical wall portion (14) and the hollow space in the central portion (30) are in communication with feed and discharge lines (31, 33) for a cooling medium in the shank part (12).

## Patentansprüche

1. Vorrichtung zum Massieren von Fleischstücken, mit einem Behälter (5) zur Aufnahme einer Fleischmenge, einem Schließkörper (15), der abdichtend auf den Behälter (5) aufsetzbar ist, um Vakuumbedingungen im Behälter zu ermöglichen, wobei der Schließkörper wenigstens ein Bewegungselement (14) aufweist, das als eine auf den Behälter gerichtete Schnecke ausgebildet ist, und einer Einrichtung zum In-Kontakt-Bringen des Bewegungselementes mit dem Fleisch, **dadurch** **gekennzeichnet**, daß die Höhe des Bewegungselementes (14) wenigstens dem Abstand zwischen der Oberseite des Schließkörpers und dem oberen Rand des Behälters entspricht, wobei das Bewegungselement während der Vakuumbedingungen in den Behälter hineinbewegbar und aus diesem zurückziehbar ist, wenn der Schließkörper auf den Behälter aufgesetzt ist.

2. Vorrichtung nach Anspruch 1, **dadurch** **gekennzeichnet**, daß das Bewegungselement (14) koaxial im glockenförmigen Schließkörper (15) angeordnet und mit einer in abgedichteter Weise verschiebbar in der Glocke angeordneten Welle (12) versehen ist.

3. Vorrichtung nach den Anspruchen 1 und 2, **dadurch** **gekennzeichnet**, daß das Bewegungselement einen hohlen Mittelabschnitt (30) und einen um diesen herum angeordneten schraubenförmigen Wandabschnitt (34) mit einem Strömungskanal (35) umfaßt, wobei der Strömungskanal mit dem hohlen Mittelabschnitt (30) in Verbindung steht.

4. Vorrichtung nach Anspruch 3, **dadurch** **gekennzeichnet**, daß der Durchmesser des Umfangskreises des schraubenförmigen Wandabschnitts (34) ungefähr gleich dem halben Durchmesser des Behälters (5) ist.

5. Vorrichtung nach wenigstens einem der vorhergehenden Ansprüche, **dadurch** **gekennzeichnet**, daß der glockenförmige Schließkörper (15) mit einem Vakuumanschluß (28) versehen ist.

6. Vorrichtung nach wenigstens einem der vorhergehenden Ansprüche, **dadurch** **gekennzeichnet**, daß das Bewegungselement (15) mit Schaftteil (12) in einem portalförmigen Rahmen (10) vertikal montiert und drehbar angetrieben ist, wobei der glockenförmige Schließkörper so ausgebildet ist, daß er im Rahmen längs des Schaftteils (12) auf- und abbewegbar ist.

7. Vorrichtung nach wenigstens einem der vorhergehenden Ansprüche, **dadurch** **gekennzeichnet**, daß der Strömungskanal (35) im schraubenförmigen Wandabschnitt (14) und der Hohlraum im Mittelabschnitt (30) mit Zufluß- und Abflußleitungen (31,33) für ein Kühlmedium im Schaftteil (12) in Verbindung stehen.

## Revendications

1. Dispositif pour masser des morceaux de viande, comprenant un récipient (5) pour recevoir une quantité de viande, un corps (15) de fermeture destiné à être placé de façon étanche sur le récipient (5) pour fournir des conditions de vide dans le récipient, le corps de fermeture est muni d'au moins un organe (14) d'agitation en forme d'une vis sans fin dirigée vers le récipient et de moyens pour placer l'organe d'agitation en contact avec la viande, caractérisé en ce que la hauteur de l'organe d'agitation (14) correspond au minimum à la distance entre le haut du corps de fermeture et le rebord supérieur du récipient dans lequel le moyen d'agitation est déplaçable dans le récipient et rétractable de celui-ci pendant les conditions de vide, lorsque le corps de fermeture est placé sur le récipient.

2. Dispositif selon la revendication 1, caractérisé en ce que l'organe (14) d'agitation est agencé coaxialement dans le corps (15) de fermeture en forme de cloche et est muni d'une broche (12) agencée de façon coulissante et étanche dans la cloche.

3. Dispositif selon la revendication 1 ou 2, caractérisé en ce que l'organe d'agitation consiste en une partie (30) creuse centrale, et une partie de paroi en hélice (34) agencée près d'un canal de circulation (35) dans lequel le canal de circulation communique avec la partie centrale creuse (30).

4. Dispositif selon la revendication 3, caractérisé en ce que le diamètre du cercle de circonférence de la partie de paroi en hélice (34) est approximativement la moitié du diamètre du récipient (5).

5. Dispsoitif selon l'une quelconque des revendications précédentes, caractérisé en ce que le corps (15) de fermeture en forme de cloche est muni d'une connexion de vide (28).

6. Dispositif selon l'une quelconque des revendications précédentes, caractérisé en ce que l'organe (15) d'agitation avec une partie (12) de tige est monté verticalement et entraîné en rotation dans un cadre (10) en forme de portique, dans lequel le corps de fermeture en forme de cloche est adapté pour être déplaçable vers le haut et vers le bas dans le cadre le long de la partie (12) de tige.

7. Dispositif selon l'une quelconque des revendications précédentes, caractérisé en ce que le canal (35) de circulation dans la partie de paroi en hélice (14) et l'espace creux dans la partie centrale (30) sont en communication avec des conduites (31, 33) d'alimentation et d'évacuation pour un milieu de refroidissement dans la partie (12) de tige.
